# EUROPEAN PATENT SPECIFICATION

(11) **EP 1 975 452 B1**
(45) Date of publication and mention of the grant of the patent: **27.08.2014**
(21) Application number: 08152811.9
(22) Date of filing: 14.03.2008
(51) Int. Cl.: F16D 66/02

(54) **Wear sensor**
Verschleisssensor
Capteur d'usure

(30) Priority: 16.03.2007 IT TO20070041 U
(43) Date of publication of application: 01.10.2008
(73) Proprietor: I.C.P. S.r.l., CASTELNUOVO DON BOSCO (IT)
(72) Inventor: Razzano, Tancredi, 14020 Piova' Massaia (IT)
(74) Representative: Bergadano, Mirko

(56) References cited:
- FR-A- 2 266 056
- JP-A- 11 173 353

## Description

The present invention relates to a wear sensor for a braking member, in particular a brake pad for vehicles, to which the following description will explicitly refer without any loss of its generality.

As is known, a brake pad for vehicles comprises a support plate, a block of friction material carried by the support plate, and a wear sensor to detect a wear limit condition of the block of friction material and order the emission of an acoustic or optical signal informing the driver of the need to replace the friction material.

In most applications, the wear sensor comprises electrical wiring that may or may not be insulated, a terminal section of the free extremity of which is housed in a blind hole obtained in the block of friction material and is retained within said hole, for example, by means of gluing material interposed between the terminal section and the block of friction material.

Following the insertion of the terminal section in the block of friction material or during the use of the brake pad, for example, because of stresses transmitted to said brake pad from outside, the terminal section of the electrical wiring may end up in a functional position in which it is partially extracted and thus different from the normal fully inserted position. It follows that, when the terminal section is arranged in said partially extracted position, the sensor does not send signals or sends them after a delay in relation to the moment in which the friction material reaches its wear limit condition compromising, in this way, the proper functioning of the braking members but, above all, putting the safety of the persons on board the vehicle at risk.

JP 11-173 353 A, figures 1-13, shows a braking member (2) of a vehicle comprising a supporting member (5); and a block (4) of friction material carried by said supporting member (5) and suitable to cooperate frictionally with a relative metal braking member (7) and having coupled a sensor (1) comprising electrical wiring (13) and a detection portion (18) connected to said electrical wiring and coupled to said block (4) of friction material in a fixed operating position of reference in order to detect a wear limit state of the block (4) of friction material; a cellar member (20) distinct from said electrical wiring (13) and from said braking member being permanently conected to the electrical wiring (13) to visibly detect from the outside when said detection portion is in a position other than said fixed operating position of reference, said detection portion being defined by a terminal section of said electrical wiring, and said collar member (20) being only connected to an intermediate portion of said electrical wiring.

The aim of the present invention is to provide a wear sensor with constructional characteristics that are able to overcome the disadvantages described above in a simple and cost-effective manner, and which continues to be efficient and functionally reliable over time, and also involves limited implementation costs.

According to the present invention, a wear sensor is produced for a braking member of a vehicle, as claimed in Claim 1.

The innovation will now be described with reference to the attached drawings, which illustrate an example of a non-limiting embodiment, in which:
Figure 1 is a frontal view of a preferred embodiment of the wear sensor implemented according to the dictates of the present innovation;
Figure 2 is a rear view of a terminal section of the wear sensor of Figure 1;
Figure 3 illustrates a cross-section along the line III-III of Figure 2;
Figure 4 partially illustrates the wear sensor of Figure 1 joined to a braking member of a vehicle, which is also partially illustrated; and
Figure 5 illustrates a variant of a detail of Figures 1 to 3.

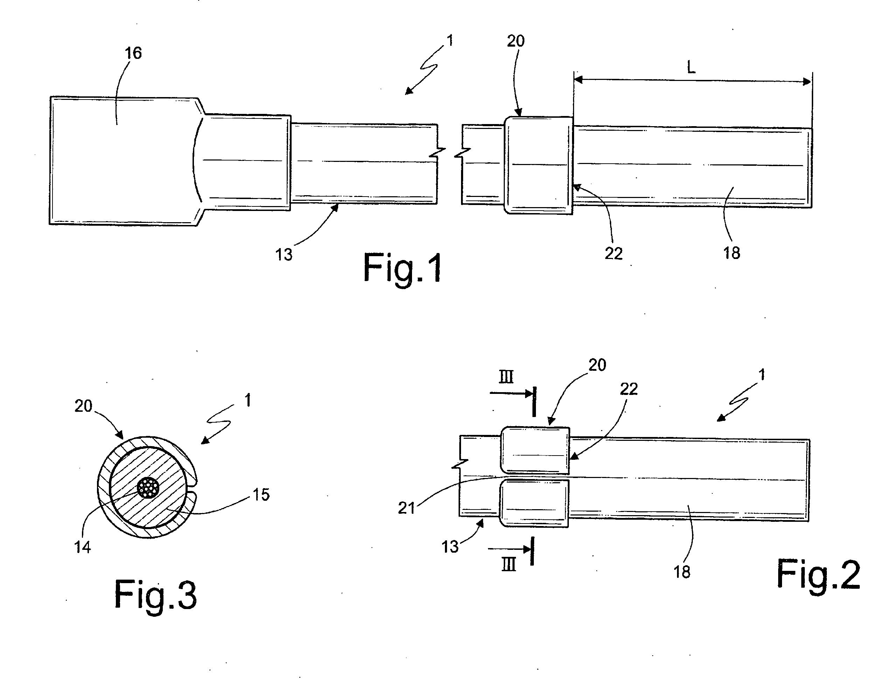

In Figures 1 to 4, number 1 indicates, as a whole, a wear sensor for the detection of a wear limit condition of a braking member 2 for a vehicle, for example, a brake pad. The braking member 2 comprises a block 4 of friction material, and a supporting member 5 of said block 4 of friction material.

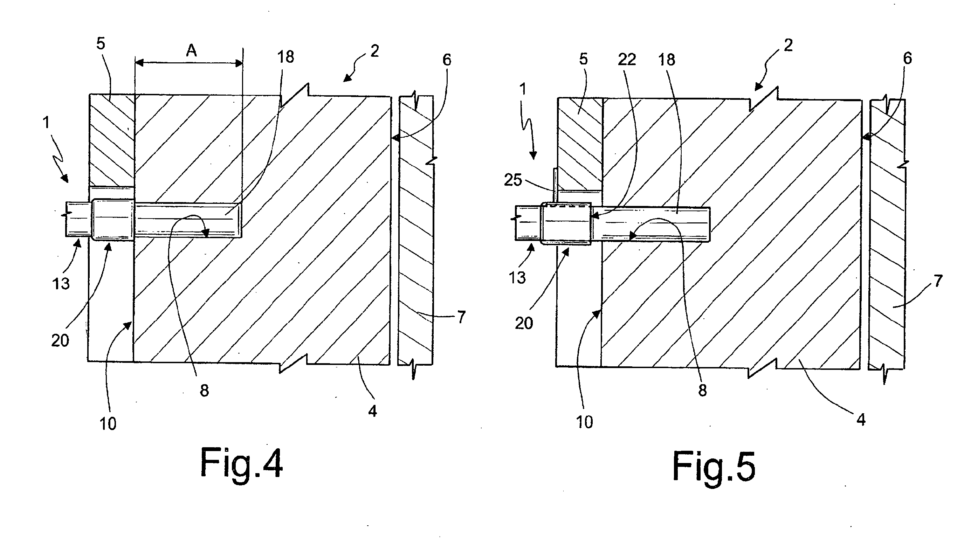

With reference to Figure 4, the block 4 of friction material is delimited, on one side, by a friction surface 6 suitable to cooperate frictionally with a brake disk 7, and is provided with a blind hole 8 extending for a predefined length A starting at the surface 10 opposite the surface 6 orthogonal to said surface 6.

With reference to the Figures from 1 to 4, the sensor 1 comprises insulated electrical wiring 13 in turn comprising (Figure 3) a core 14 of conductor material and an external sheath 15 made of insulating material. The electrical wiring 13 has one extremity connected to an electrical connector 16 for the connection of the electrical wiring 13 to a cable bundle of the vehicle (not illustrated), and an opposite terminal section 18, the length L of which approximated by defect corresponds to the depth A of the hole 8 and which is completely inserted in said hole 8 and conveniently retained therein in a fixed position of reference, through the interposition of gluing material. Alternatively, according to variants that are not illustrated, the terminal section 18 is retained within the blind hole 8 by elastic devices or metal brackets, of a known type.

Again with reference to Figures 1 to 4, the sensor 1 further comprises a collar member 20 suitable to enable an operator to visibly detect from the outside an irregular positioning of the section 18, that is, a condition of insertion or operation in which the terminal section 18 is partially or completely extracted from the blind hole 8 and therefore arranged in a position that is different from the correct fixed operating position of reference.

In the particular example described, the collar member 20 consists of an open ring fitted on an intermediate portion 21 of the electrical wiring 13 close to the terminal section 18, has an outside diameter greater than that of the hole 8, and is delimited, on the part facing the terminal section 18, by an annular frontal surface or shoulder 22. In this way, when the terminal section 18 is inserted in the hole 8 and placed in its fixed operating position of reference, the surface 22 rests against the surface 10 of the block 4 of friction material.

Alternatively, according to the variant illustrated in Figure 5, the annular surface 22 is arranged at a distance from the free extremity of the terminal section 18 greater than the distance L and the length A, and therefore, when completely inserted, the surface 22 is distanced from the surface 10. In said solution, the collar member 20 comprises a radial appendage 25 which, when the section 18 is arranged in its fixed operating position of reference, rests against the supporting member 5. According to an additional variant that is not illustrated, when the section 18 is arranged in its fixed operating position of reference, the radial appendage 25 rests against a sound-reducing plate of the braking member.

Irrespective of the particular form of embodiment, the collar member 20 is made of plastically deformable material, conveniently metal and preferably a brass or aluminum alloy, and is plastically deformed directly above said electrical wiring 13. Alternatively, the collar member 20 is joined to the wiring 13 by means of an interference coupling exploiting the elasticity of the insulating sheathing of said wiring 13 or of said collar member 20.

According to a different embodiment, the collar member 20 is permanently connected to the wiring 13 by means of the interposition of a gluing material or by means of a thermobonding operation.

From the forgoing it is clear that the constructional characteristics of the wear sensor 1 and, in particular, the presence of the collar member 20 permanently connected to the electrical wiring 13 enable a technician to visibly detect from the outside and in an extremely simple and immediate manner and, above all, at any time during the functional life of the braking member 2 starting from the time of insertion of the terminal section 18 in the blind hole 8, the possible irregular position of the terminal section 18 in relation to the block 4 of friction material. In other words, the collar member 20 enables a technician to detect from the time of assembly when the terminal section 18 is in a position different from the predetermined operating position of reference so as to report production defects or those emerging during use. When the terminal section 18 is in a position different from the fixed position of reference, the collar member 20 is spaced away from the block 4 of material and the deviation of the surface 22 from the surface 10 of the block 4 of said friction material or the deviation of the appendage 25 from the supporting body 5 or from the sound-reducing plate should the appendage 25 be arranged so as to rest against the latter, is clear.

From the foregoing it is also clear that the collar member 20, precisely because it is made of metal, is practically insensitive to temperature, unlike other materials, and therefore its physical and mechanical properties remain unchanged even when it operates at high temperatures and in the presence of water and/or external contaminants.

Because it is made of metal, the collar member 20 can be secured to the electrical wiring 13 of the sensor 1 without the need to modify the current moulds used to make said sensor and/or to use plastic materials other than those normally used for the forming of the sensor.

The particular collar or ring shape combined with the metal facilitates, on the one hand, the coupling of the member 20 to the wiring 13 and, on the other hand, the blocking by means of simple plastic deformation, as this operation can be carried out during a completely automatic forming cycle and thus keeping costs particularly low.

From the foregoing it is clear how the described wear sensor 1 can be modified and varied without departing from the scope of the invention as defined by the claims.

It is clear that the collar member 20 could be made only partially of metal and the material used could be different from that indicated by way of example.

## Claims

1. A braking member (2) of a vehicle comprising a supporting member (5); and a block (4) of friction material carried by said supporting member (5) and suitable to cooperate frictionally with a relative metal braking member (7) and having coupled a sensor (1) comprising electrical wiring (13) and a detection portion (IE) connected to said electrical wiring and coupled to said block (4) of friction material in a fixed operating position of reference in order to detect a wear limit state of the block (4) of friction material; a collar member (20) distinct from said electrical wiring (13) and from said braking member being permanently connected to the electrical wiring (13) to visibly detect from the outside when said detection portion is in a position other than said fixed operating position of reference, said detention portion being defined by a terminal section of said electrical wiring, wherein said collar member (20) is only connected to an intermediate portion of said electrical wiring and comprises an axial shoulder (22;25) resting directly against a surface of reference of said block (4) of frictional material or said supporting member (5) when said detection portion is in said fixed operating position of reference and is spaced away from said block (13) of frictional material or said supporting member (5) when said detection portion is in a position other than said fixed operating position of reference.

2. Breaking member according claim 1, **characterized by** the fact that said collar member (20) comprises an open or C-shaped collar.

3. Breaking member according to any one of the preceding claims, **characterized by** the fact that said collar member (20) is connected to said electrical wiring by means of an interference coupling.

4. Breaking member according to claim 2, **characterized by** the fact that said collar member (20) is forced onto said wiring.

5. Breaking member according to any one of the preceding claims, **characterized by** the fact that said collar member (20) is made, at least in part, of plastically deformable material.

6. Breaking member according to claim 5, **characterized by** the fact that said collar is made entirely of metal.

7. Breaking member according to claim 5 or 6, **characterized by** the fact that said collar member (20) is made, at least in part, of a brass or aluminum alloy.

## Patentansprüche

1. Bremselement (2) eines Fahrzeugs, das umfasst: ein Tragelement (5); und einen Block (4) aus Reibmaterial, der von dem Tragelement (5) getragen wird und dafür ausgelegt ist, mit einem damit in Beziehung stehenden Metallbrems-element (7) reibungstechnisch zusammenzuwirken, und mit dem ein Sensor (1) gekoppelt ist, der eine elektrische Verdrahtung (13) und einen mit der elektrischen Verdrahtung verbundenen Detektionsabschnitt (18), der mit dem Block (4) aus Reibmaterial in einer festen Referenzarbeitsposition gekoppelt ist, um einen Verschieißgrenzzustand des Blocks (4) aus Reibmaterial zu detektieren, enthält; wobei ein Kranzelement (20), das von der elektrischen Verdrahtung (13) und von dem Bremselement verschieden ist, mit der elektrischen Verdrahtung (13) dauerhaft verbunden ist, um von außen sichtbar zu detektieren, wenn sich der Detektionsabschnitt in einer von der festen Referenzarbeitsposition verschiedenen Position befindet, wobei der Detektionsabschnitt durch einen Anschlussabschnitt der elektrischen Verdrahtung definiert ist, wobei das Kranzelement (20) nur mit einem Zwischenabschnitt der elektrischen Verdrahtung verbunden ist und eine axiale Schulter (22; 25) aufweist, die direkt auf einer Referenzoberfläche des Blocks (4) aus Reibmaterial oder des Tragelements (5) aufliegt, wenn der Detektionsabschnitt in der festen Referenzarbeitsposition ist, und von dem Block (13) aus Reibmaterial oder von dem Tiagelement (5) beabstandel ist, wenn der Detektionsabschnitt in einer von der festen Referenzarbeitsposition verschiedenen Position ist.

2. Bremselement nach Anspruch 1, **dadurch gekennzeichnet, dass** das Kranzelement (20) einen offenen oder C-förmigen Kranz umfasst.

3. Bremselement nach einem der vorhergehenden Ansprüche, **dadurch gekennzeichnet, dass** das Kranzelement (20) mit der elektrischen Verdrahtung über eine Interferenzkopplung verbunden ist.

4. Bremselement nach Anspruch 2, **dadurch gekennzeichnet, dass** das Kranzelement (20) auf die Verdrahtung gepresst ist.

5. Bremselement nach einem der vorhergehenden Ansprüche, **dadurch gekennzeichnet, dass** das Kranzelement (20) wenigstens teilweise aus einem plastisch verformbaren Material hergestellt ist.

6. Bremselement nach Anspruch 5, **dadurch gekennzeichnet, dass** der Kranz vollständig aus Metall hergestellt ist.

7. Bremselement nach Anspruch 5 oder 6, **dadurch gekennzeichnet, dass** das Kranzelement (20) wenigstens teilweise aus Messing oder einer Aluminiumlegierung hergestellt ist.

## Revendications

1. Elément de freinage (2) d'un véhicule comprenant un élément de support (5) ; et un bloc (4) de matériau de friction porté par ledit élément de support (5) et approprié pour coopérer en friction avec un élément de freinage métallique relatif (7) et auquel est couplé un capteur (1) comprenant un câblage électrique (13) et une partie de détection (18) connectée audit câblage électrique et couplée audit bloc (4) de matériau de friction dans une position de fonctionnement fixe de référence afin de détecter un état de limite d'usure du bloc (4) de matériau de friction ; un élément de collier (20) distinct dudit câblage électrique (13) et dudit élément de freinage étant connecté en permanence au câblage électrique (13) pour détecter visiblement, à partir de l'extérieur, quand ladite partie de détection est dans une position autre que ladite position de fonctionnement fixe de référence, ladite partie de détection étant définie par une section de borne dudit câblage électrique, dans lequel ledit élément de collier (20) est seulement connecté à une partie intermédiaire dudit câblage électrique et comprend un épaulement axial (22 ; 25) reposant directement contre une surface de référence dudit bloc (4) de matériau de friction ou ledit élément de support (5) lorsque ladite partie de détection est dans ladite position de fonctionnement fixe de référence et est espacée dudit bloc (13) de matériau de friction ou ledit élément de support (5) lorsque ladite partie de détection est dans une position autre que ladite position de fonctionnement fixe de référence.

2. Elément de freinage selon la revendication 1, **caractérisé par le fait que** ledit élément de collier (20) comprend un collier ouvert ou en forme de C.

3. Elément de freinage selon une quelconque des revendications précédentes, **caractérisé par le fait que** ledit élément de collier (20) est connecté audit câblage électrique au moyen d'un couplage d'interférence.

4. Elément de freinage selon la revendication 2, **caractérisé par le fait que** ledit élément de collier (20) est forcé sur ledit câblage.

5. Elément de freinage selon une quelconque des revendications précédentes, **caractérisé par le fait que** ledit élément de collier (20) est fait, au moins en partie, de matériau déformable de façon plastique.

6. Elément de freinage selon la revendication 5, **caractérisé par le fait que** ledit collier est entièrement fait de métal.

7. Elément de freinage selon la revendication 5 ou 6, **caractérisé par le fait que** ledit élément de collier (20) est fait, au moins en partie, d'un alliage de laiton ou d'aluminium.
